**Europäisches Patentamt**

**European Patent Office**

**Office européen des brevets**

(19)

(11) Veröffentlichungsnummer: **0 008 089**
**B1**

(12) **EUROPÄISCHE PATENTSCHRIFT**

(45) Veröffentlichungstag der Patentschrift: **03.11.82**

(51) Int. Cl.³: **G 01 S 17/10, G 04 F 13/02**

(21) Anmeldenummer: **79102791.5**

(22) Anmeldetag: **03.08.79**

(54) Laser-Impuls-Entfernungsmesser mit optischem Korrelator.

(30) Priorität: **08.08.78 DE 2834660**

(43) Veröffentlichungstag der Anmeldung:
**20.02.80 Patentblatt 80/4**

(45) Bekanntmachung des Hinweises auf die Patenterteilung:
**03.11.82 Patentblatt 82/44**

(84) Benannte Vertragsstaaten:
**CH DE FR GB**

(56) Entgegenhaltungen:
**US - A - 3 445 668**
**US - A - 3 453 429**
**US - A - 3 497 703**
**US - A - 3 669 541**
**US - A - 3 676 003**
**US - A - 3 737 231**
**US - A - 4 097 148**

(73) Patentinhaber: **HONEYWELL GMBH**
**Kaiserleistrasse 55**
**D-6050 Offenbach am Main (DE)**

(72) Erfinder: **Holzapfel, Wolfgang, Dr.-Ing.**
**Kilianstädter Strasse 13**
**D-6454 Bruchköbel (DE)**

(74) Vertreter: **Rentzsch, Heinz et al,**
**Honeywell Europe S.A. Holding KG**
**Kaiserleistrasse 55**
**D-6050 Offenbach am Main (DE)**

Courier Press, Leamington Spa, England.

## Laser-Impuls-Entfernungsmesser mit optischem Korrelator

Die Erfindung betrifft einen Laser-Impuls-Entfernungsmesser nach dem Gattungsbegriff des Anspruchs 1.

Aus der Druckschrift (vgl. Literaturverzeichnis am Schluß der Beschreibung) sind Aufbau und Wirkungsweise eines modengekoppelten Lasers bekannt und zugleich wird darauf hingewiesen, daß die von solchen Lasern erzeugten äußerst kurzen Impulse hoher Spitzenleistung unter anderem auch zur Entfernungsmessung eingesetzt werden können. Man weiß ferner, daß bei Entfernungsmeßverfahren nach dem Impulslaufzeitprinzip die Entfernungsauflösung um so besser ist, je kürzer die Impulsdauer ist. Wenn trotzdem bislang modengekoppelte Laser als Sendeoszillatoren in Entfernungsmessern nicht eingesetzt wurden, so liegt der Hauptgrund hierfür darin, daß eine solche an sich vorteilhafte kurze Impulsdauer auf der Empfangsseite wegen der Trägheit der zur Verfügung stehenden optisch-elektronischen Mittel nicht ausgenutzt werden konnte. Die Zeitkonstanten selbst der schnellsten zur Zeit verfügbaren optischen Detektoren, wie Avalanche-bzw. PIN-Photodioden, liegen um ein bis zwei Größenordnungen über der Dauer eines Lichtimpulses aus einem modengekoppelten Laser.

Aufgabe der Erfindung ist es folglich, einen neuen hochauflösenden Laser-Impuls-Entfernungsmesser (manchmal auch Laser-"Radar" genannt) zu schaffen, bei dem die äußerst kurze Impulsdauer modengekoppelter Laser voll zur Erhöhung der Meßgenauigkeit ausgenutzt werden kann.

Die Erfindung geht hierzu von einem Laser-Impuls-Entfernungsmesser aus, wie er aus der US—A 3676003 bekannt ist. Bei diesem Laser-Entfernungsmesser mit "SHG II"-Korrelator (SHG="second harmonic generation") im Empfänger werden das reflektierte Signal und das einstellbar verzögerte Signal nicht nur hinsichtlich des Zeitpunkts ihres Eintreffens auf dem SHG-Kristall, sondern auch hinsichtlich ihrer Form miteinander verglichen. Erst wenn das Detektorausgangssignal die gleiche Form hat wie das Sendesignal, stimmt die zeitliche Verzögerung des Vergleichssignals mit der Laufzeit des Sendesignals überein und ist somit ein Maß für die Entfernung. Dies bedeutet aber, daß die Einschwingzeit des SHG-Kristalls und des nachgeschalteten Detektors wesentlich kürzer sein müssen als die Dauer der kürzesten Sendeimpulse. Andernfalls würde sich die Form der Detektorimpulse gegenüber den Sendeimpulsen ändern und der Vergleich des Empfangsignals mit dem verzögerten Signal nicht möglich sein. Der Sendeimpuls muß also wesentlich länger sein als die Zeitkonstante des Detektors. Dies schließt die Verwendung äußerst kurzer Sendeimpulse aus.

Weiterhin ist aus der US—A 3669541 die Verwendung modengekoppelter Laser zur Impulsbreiten-Messung und die "TPF"-Methode zur Messung der Koinzidenz zweier Laser-strahlungen bekannt. Ferner ist auf die Möglichkeit der Anwendung der extrem kurzen Impulse modengekoppelter Laser zur Entfernungsmessung hingewiesen. Für die in US—A 3669541 erläuterte Bildanzeige mit hoher Auflösung wird zwar ein modengekoppelter Laser eingesetzt, jedoch erfolgt die Erkennung des Echoimpulses mit Hilfe eines zusätzlichen Impulslasers, der eine optische Torschaltung steuert.

Die Verwendung der Zwei-Photonen-Absorption (TPF="two photon fluorescence") zur Pulsbreiten-Messung ist beispielsweise in US—A 3453429 beschreiben.

Die Erfindung löst die gestellte Aufgabe durch die Kombination der im Anspruch 1 gekennzeichneten Merkmale. Die Anwendung optischer Korrelationsmeßverfahren unter Ausnutzung nichtlinearer optischer Elemente ist auch aus den Druckschriften 2 bis 7 bekannt, dient dort jedoch zum Nachweis bzw. zur Bestimmung der Impulsdauer äußerst kurzer Impulse. Die Erfindung hingegen nutzt diese an sich begannten nichtlinearen optischen Effekte aus, den Echoimpuls und den in einem optischen Laufzeitglied verzögerten Bezugsimpuls einer Kreuzkorrelation zu unterwerfen. Wesentlich für die meßtechnische Nutzung solcher nichtlinearer optischer Korrelatoren ist, daß die Sekundärstrahlungsemission zeitlich um Größenordnungen länger andauren kann als der primär auftretende Laserimpuls, so daß ein nachgeschalteter Strahlungsdetektor trotz seiner gegenüber der Impulsdauer beträchtlichen Zeitkonstante in der Lage ist, das Ausgangssignal eines solchen optischen Korrelators zuverlässig in ein elektrisches Signal umzuwandeln.

Vorteilhafte Weiterbildungen der Erfindung ergeben sich aus den Unteransprüchen. Bei der Methode der Zwei-Photonen-Absorption (TPF) werden fluoreszierende Farbstoffe, z.B. Rhodamin 6G in Äthylalkohollösung oder 1, 2, 5, 6-Dibenzanthrazen—benutzt, die speziell eine starke Absorption für Licht der doppelten Laserfrequenz besitzen. Die Fluoreszenzausbeute dieser Farbstoffe ist dem Quadrat der Lichtintensität proportional, weil für jeden atomaren Absorptionsvorgang zwei Photonen der Laserstrahlung verbraucht werden. Bei der Methode der Frequenzverdoppelung (SHG) werden optisch nichtlineare Kristalle, z.B. KDP, ADP oder Lithiumniobat als Detektor für das Laserlicht eingesetzt. Diese Kristalle haben Polarisationseigenschaften, die vom Quadrat der elektrischen Feldstärke abhängen. Bei Wechselwirkung mit Laserlicht entsteht Strahlung mit der doppelten Frequenz, wobei jeweils zwei Photonen der Laserstrahlung ein Photon der Sekundärstrahlung erzeugen. Neben diesen Methoden ist auch die Anwendung weiterer Nachweis verfahren möglich.

Die Erfindung wird nachfolgend anhand in den Zeichnungen dargestellter Ausführungsbeispiele erläutert. Dabei zeigt:

Fig. 1 den prinzipiellen Aufbau eines Laser-Entfernungsmessers mit optischem Korrelator;

Fig. 2 eine Ausführungsform, bei der die Signalauswertung nach der Differenzmethode durch Vergleich eines einen Meßkanal durchlaufenden Signales mit einem einen Bezugskanal durchlaufenden Signal erfolgt; und

Fig. 3 eine Ausführungsform, bei der störende Intensitätsschwankungen des optischen Signals im Übertragungskanal kompensiert sind.

Als Senderoszillator dient ein modengekoppelter Laser 1, der in gleichen Zeitabständen T äußerst kurzzeitige Strahlungsimpulse mit der Trägerfrequenz $\Omega$ und der Leistung $P_S$ in Richtung auf das Ziel 2 abstrahlt. Beispiele für modengekoppelte Laser sind sowohl in Form von Festkörperlasern (Rubin; $Nd^{3+}$:Glas; $Nd^{3+}$:YAG) sowie in Form von Gaslasern ($CO_2$:$N_2$; He—Ne; $Ar^+$) in der Druckschrift 8 beschrieben. So ist es beispielsweise mit einem modengekoppelten $Nd^{3+}$: Glas-Laser möglich, Strahlungsimpulse von Picosekunden bei Spitzenleistungen im Gigawattbereich zu erzeugen. Bei der Betriebsart Q-Switch mit Modenkopplung wird der Laseroszillator in einer möglichst großen Anzahl N longitudinaler Moden angeregt und die Güte des optischen Resonators im Takt der Differenzfrequenz benachbarter longitudinaler Wellenformen moduliert. Eine derartige abgestimmte HF-Modulation kann im aktiven Verfahren, z.B. mit Hilfe einer Kerrzelle oder passiv mittels eines intensitätsabhängigen Absorbers im Inneren des Laserresonators erfolgen (Druckschriften 1, 9). Hierdurch überlagern sich nach dem Prinzip der Fourier-Synthese die einzelnen Wellenformen phasenrichtig, und der Laser emittiert eine regelmäßige Impulsfolge mit der Wiederholungsfrequenz $f_o$. Werden N Wellenformen mit gleicher Intensität $I_o$ im Laser angeregt, so gilt für den zeitlichen Verlauf der Strahlungsintensität $I_N$ des modengekoppelten Lasers

$$I_N = I_o \frac{\sin^2 N\omega_o t/2}{\sin^2 \omega_o t/2}$$

mit $\omega_o$=Kreisfrequenz der Wiederholungsfrequenz.

Somit steigt der Spitzenwert der Intensität quadratisch mit Anzahl N der Longitudinalwellenformen an,

$$\hat{I}_N = N^2 I_o$$

während die Halbwerts-Impulsdauer $\Delta t_{1/2}$ mit der Zahl N der angeregten Wellenformen absinkt;

$$\Delta t_{1/2} = \frac{1}{N} T.$$

Die kürzeste Dauer Min $\Delta t_{1/2}$ des Einzelimpulses wird offensichtlich dann erreicht, wenn die größtmögliche Anzahl N der Wellenformen des Laser angeregt wird, d.h. die volle laserfähige Breite $2\Delta\Omega$ des atomaren Verstärkerüberganges ausgenutzt wird. Da die Laufzeit $\tau$ des Laserimpulses mit der Zielentfernung A bekanntlich über die Beziehung

$$A = \frac{C}{2} \tau$$

(c=Lichtgeschwindigkeit)

verknüpft ist, bietet die extrem kurze Impulsdauer eines modengekoppelten Lasers auch bei schlechtem Signal/Rausch-Verhältnis eine Entfernungsauflösung von

$$\delta A = \frac{c}{2} \delta\tau = \frac{c}{2} \Delta t,$$

die für
$\Delta t = 1_o^{-12}$ s in der Größenordnung von $1_o^{-4}$ m liegen.

Auf seinem Weg vom Laser 1 zum Ziel 2 durchläuft der Senderstrahl zwei Strahlteiler 3 und 4. Mittels des Strahlteilers 3 wird ein kleiner Teil der vom Sender abgegebenen Strahlungsintensität $P_S$ bereits senderseitig in Form der Bezugsstrahlung $P_R$ in das Empfangssystem der Meßanordnung gespeist und dient dort als Bezugssignal. Es gelangt zunächst zu einem optischen Laufzeitglied 5 und wird darin, durch das Ausgangssignal eines Steuergenerators 6 gesteuert, um eine Zeitspanne $\tau_A$ verzögert. Das verzögerte Bezugssignal $P_R$ gelangt dann über einen Umlenkspiegel 7 zum optischen Korrelator 8. Der durch die Strahlteiler 3 und 4 hindurchlaufende Senderstrahl wird vom Ziel 2 reflektiert und vom Strahlteiler 4 als Meßstrahl $P_Z$ ebenfalls auf den optischen Korrelator 8 geworfen.

Das optische Laufzeitglied 5 kann beispielsweise mit Hilfe von Interferometersystemen und Laserverstärkern realisiert werden. Da die Konstanz der eingestellten Laufzeit entscheidend die Meßgenauigkeit bestimmt, ist zur Ausschaltung von Störeinflüssen gegebenenfalls ein aktive Stabilisierung der Verzögerungsstrecke mit Hilfe eines Referenzoszillators erforderlich. Als Laufzeitglieder können auch Lichtleiter eingesetzt werden, wobei sich eine etwaige durch die begrenzte Bandbreite bedingte Verbreiterung der optischen Impulsdauer durch den anschließenden Einsatz optischer Impulskompressionsverfahren Druckschriften 2, 10 beseitigen läßt. Wegen der niedrigen Dämpfung von Lichtleitern können auf diese Weise, gegebenenfalls unter Zwischenschaltung von Laserverstärkern, Verzögerungswege von einigen $10^4$ km realisiert werden.

Die Zeitverzögerung $\tau_A$ kann mit Hilfe des Steuergenerators 6 eingestellt bzw. verändert werden, wobei vorausgesetzt ist, daß die Periodendauer $T_A$ groß ist gegenüber der Zeitkonstanten des aus dem Photodetektor 9, dem Tiefpaß 10 und dem Oszillographen 11 bestehenden Auswertesystems.

Ferner wird davon ausgegangen, daß während einer Periode der Steuerspannung des Steuergenerators 6 eine Vielzahl von Laserimpulsen durch den Senderoszillator 1 abgestrahlt wird, wobei der zeitliche Abstand der einzelnen Senderimpulse größer ist als die maximale Laufzeit der Impulse von Sender zum Ziel und zurück zum Empfänger.

Eine optische Überlagerung der Strahlungsintensität des Echoimpulses $P_Z$ und des Bezugsimpulses $P_R$ im nichtlinearen Element 8 des optischen Korrelators kann erreicht werden, wenn beide Impulse dort zur gleichen Zeit eintreffen, d.h. wenn die Zeitverzögerung $\tau_A$ des Bezugsimpulses $P_R$ durch das Laufzeitglied 5 gleich der Laufzeit des Meßimpulses vom Sender zum Ziel und zurück zum Empfänger und damit dem Abstand A des Ziels proportional ist.

Bedingt durch den Effekt der Zweiquanten-Fluoreszenz (TPF) bzw. Frequenzverdoppelung (SHG) entsteht bei der Wechselwirkung der Laserstrahlung mit dem nichtlinearen Element 8 Strahlung mit der doppelten Laserfrequenz $2\Omega_0$. Das Ausgangssignal des Photodetektors—der Photostrom $I_2$—ist wegen des begrenzten räumlichen und zeitlichen Auflösungsvermögens des Photodetektors der mittleren Intensität $P_{2\Omega_0}$ der vom nichtlinearen Element 8 abgestrahlten Sekundärstrahlung doppelter Frequenz proportional, d.h.

$$J_{2\Omega_0} = k\, P_{2\Omega_0}$$

Die Konstante K kennzeichnet den Übertragungsfaktor des Photodetektors bei der Frequenz $2\Omega_0$.

Die physikalischen Gesetzmäßigkeiten, welche die Abhängigkeit der durch den TPF- bzw. den SHG-Effekt erzeugten Sekundärstrahllungsintensität von den Strahlungsgrößen des Laseroszillators und den Parametern des nichtlinearen Elements 8 Beschrieben, sind beispielsweise in den Druckschriften 3 bis 5 dargelegt. Demnach ist die Sekundärstrahlungsintensität beim TPF-Effekt dem Quadrat der Resultierenden Laserstrahlintensität proportional. Das gleiche gilt für den SHG-Effekt, sofern die überlagerten Strahlungskomponenten die gleiche Polarisationsebene haben, was im folgenden als SHG-I bezeichnet wird. Haben Echostrahl und Bezugsstrahl hingegen zeuinander orthogonale Polarisation — was im folgenden als SHG-II bezeichnet wird — so ist

die Strahlungsintensität $P_{2\Omega_0}$ dem Produkt der Einzelintensitäten proportional. Es läßt sich nachweisen, daß das Ausgangssignal des Photodetektors durch die Kreuzkorrelationsfunktion der Strahlungsintensität des Meß-und des Bezugsstrahls bestimmt wird. Zusätzlich verursacht bei der TPF-Detektion ein wegen der Periodizität der elektrischen Feldstärken laufzeitunabhängiger Fluoreszenzanteil einen Beitrag zum Detektorstrom. Die Größe des Detektorsignals ist eine Funktion der Zeitverzögerung des Echoimpulses und damit von der Zielentfernung.

$$A = \frac{c}{2}\, \tau$$

abhängig. Somit ist aus dem Verlauf der Korrelationsfunktion eine meßtechnische Ermittlung der Zielentfernung A nach dem Prinzip der $\tau$-Auswertung möglich. Der Detektorstrom erreicht seinen Maximalwert, wenn die Verzögerung $\tau_A$ des Bezugsstrahls im Laufzeitglied 5 gerade gleich der Laufzeit $\tau$ des Meßimpulses ist.

Das Ausgangssignal des Photodetektors 9 gelangt über den Tiefpaß, dessen Grenzfrequenz beispielsweise in der Größenordnung von 100 Hz liegt, an den Signaleingang des Oszillographen 11, dessen Kathodenstrahl im Takt der Ausgangsspannung des Steuergenerators 6 abgelenkt wird. Somit erscheint auf dem Bildschirm an einer der Laufzeit entsprechenden Stelle ein Impuls, so daß bei geeigneter Eichung die Entfernung A unmittelbar ablesbar ist. Die Laufzeitanzeige kann auch auf andere Weise erfolgen, beispielsweise indem man beim Andern der Verzögerungszeit des Laufzeitgliedes 5 durch die Steuerspannung des Steuergenerators 6 das Ausgangssignal des Photodetektors beobachtet und die Verzögerungszeit so einstellt, daß das maximals Photodetektorsignal sich einstellt. Die am Steuergenerator 6 dann eingestellte Verzögerungszeit entspricht der Laufzeit des Meßimpulses und somit dem Abstand A des Ziels vom Sender/Empfänger.

Sol zum optischen Korrelieren von Meßstrahl und Bezugsstrahl der SHG-II-Effekt ausgenutzt werden, so wird anstelle des Strahlenteilers 3 ein Polarisationsteilerprisma eingesetzt, damit Meßstrahl und Bezugstrahl orthogonal zueinander polarisiert sind.

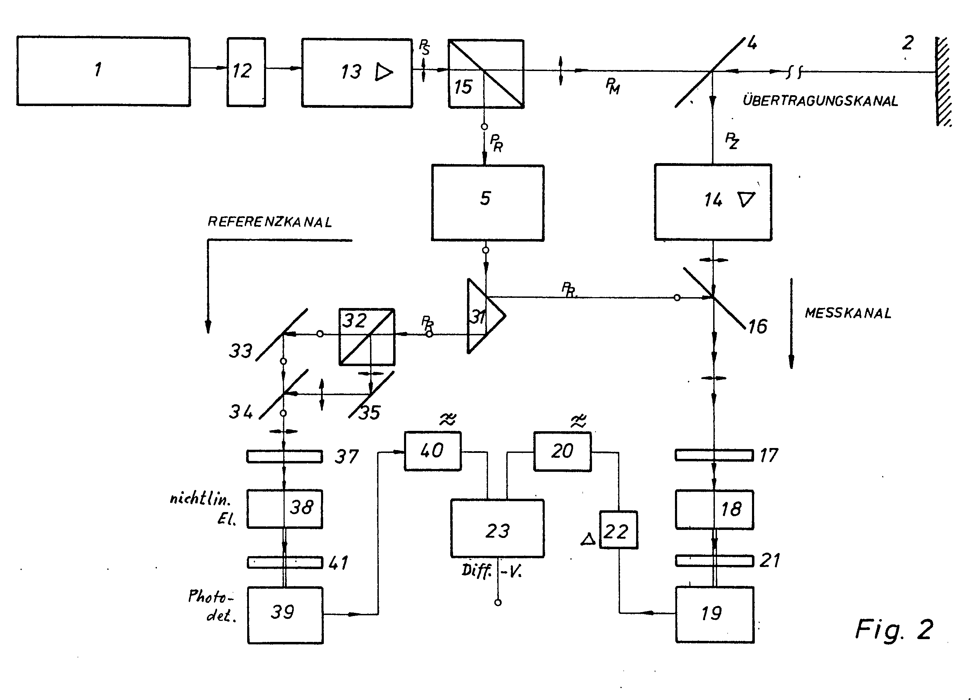

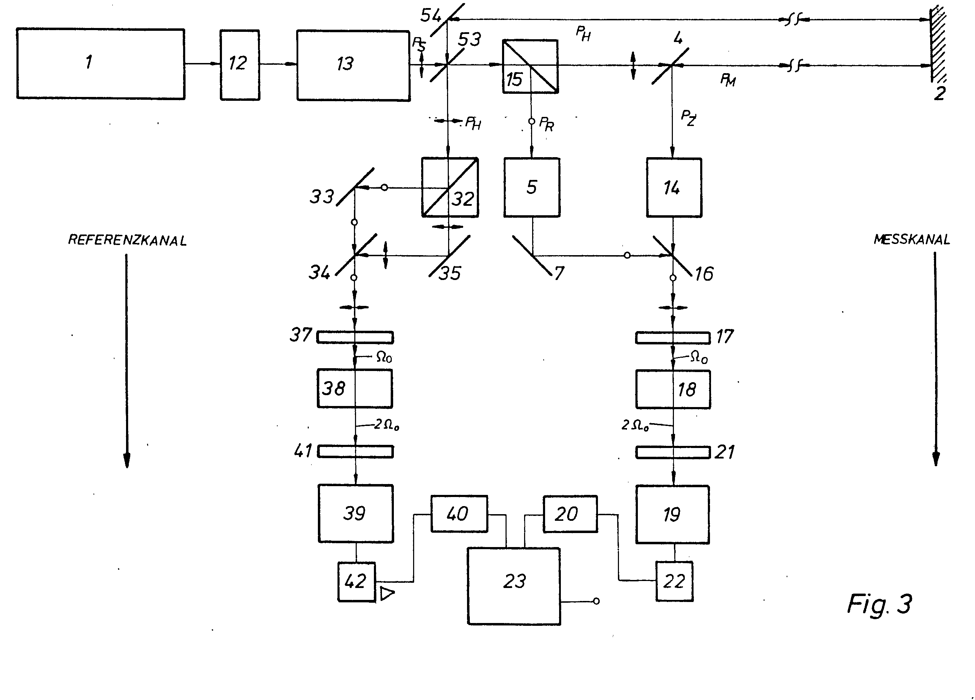

Wie oben bereits erwähnt, nimmt das Detektorausgangssignal seinen Maximalwert an, wenn die relative Laufzeitdifferenz zwischen Meßimpuls und Bezugsimpuls verschwindet. Mit zunehmender Laufzeitdifferenz verringert sich der Signalstrom rasch und zwar bei TPF- und SHG-I-Detektion auf einen konstanten Wert, der der doppelten Strahlungsintensität des Bezugsstrahls einstricht, während sich der Signalstrom bei SHG-II-Detektion auf einen Wert Null verringert. Somit ist das erzielbare Kontrastverhältnis, d.h. der Unterschied zwischen maximalem Detektorausgangssignal und Ausgangssignal bei größerer Laufzeitdifferenz beim Verfahren SHG-II günstiger. Außerdem liefert dieses Verfahren bei fester Wellenformzahl N die kleinsten Halbwertbreiten des Detektorausgangssignales, nämlich eine Halbwertsbreite, die nur wenig größer ist als diejenige des Laserimpulses selbst. Mit steigender Wellenformzahl N nehmen die Halbwertsbreiten ab. Somit erweist sich das Detektionsverfahren SHG-II für eine Impuls-Laufzeitmessung als besonders geeignet. Zudem lassen sich mit KDP-Kristallen bei der Umwandlung der optischen Grundwelle in die zweite Oberwelle Wirkungsgrade von 20% bis 30% erreichen. Bei der nachfolgenden Beschreibung der Ausführungsformen nach den Figuren 2 und 3 wird deshalb davon ausgegangen, daß die Detektion nach dem SHG-II-Verfahren erfolgt, d.h. Meß- und Bezugsstrahl orthogonal zueinander polarisiert auf den optisch nichtlinearen Kristall auftreffen.

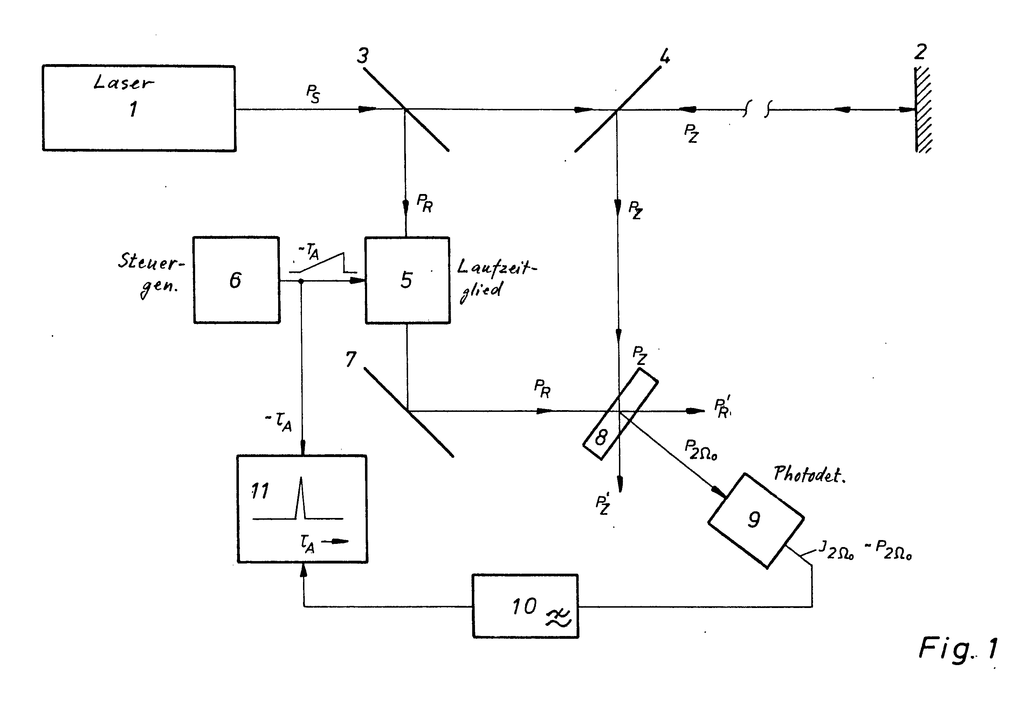

Die vom modengekoppelten Laser 1 abgestrahlten Lichtimpulse gelangen zunächst zu einem elektrooptischen Filter 12, welches aus der Folge von Strahlungsimpulsen des Senderoszillators einen oder mehrere Einzelimpulse ausfiltert, wodurch ein definiertes, der Meßaufgabe angepaßtes Eimssionsverhalten des Senders erreicht wird. Durch Ausblenden einzelner Laserimpulse kann der Entfernungsbereich in gewünschter Weise vergrößert werden. Wie erwähnt, darf währen des Meßvorgangs immer nur ein Impuls auf der Meßstrecke sein. In Verbindung mit einer geeigneten Anregung des Lasers können durch das elektrooptische Filter 12 unter Beibehaltung der kurzen Einzelimpulsdauer und damit der hohen Meßauflösung die Zeitabstände aufeinenderfolgender Lichtimpulse nahezu beliebig vergrößert werden. Mittels eines optischen Verstärkers 13 hinter dem elektrooptischen Zeitfilter 12 sowie eines weiteren optischen Verstärkers 14 am Eingang des Meßkanals kann die Strahlungsleistung erhöht und damit eine zuverlässige Korrelation gewährleistet werden. Der optische Verstärker 13 arbeitet zugleich als Polarisator, und ein nachgeschalteter Polarisationsstrahlenteiler 15 ist derart um 45° gegenüber der Polarisationsebene des ankommenden Laserlichts geneigt angeordnet, daß er das ankommende Licht in zwei zueinander orthogonal polarisierte Strahlungskomponenten zir legt, nämlich einen im Ausführungsbeispiel in der Zeichnungsebene schwingenden Meßstrahl $P_M$ und einen senkrecht zur Zeichnungsebene schwingenden Bezugsstrahl $P_R$. Der Meßstrahl $P_M$ durchläuft den Strahlenteiler 4 und wird vom Ziel 2 als Echostrahl $P_Z$ reflektiert und anschließend vom Strahlenteiler 4 auf den optischen Verstärker 14 geworfen. Von dort gelangt er durch den Strahlenteiler 16 hindurch zu einem auf die Laserfrequenz $\Omega_0$ abgestimmten optischen Filter 17. Der im Polarisationsteilerprisma 15 abgezweigte Bezugsstrahl $P_R$ wird im Laufzeitglied 5 in der oben beschriebenen Weise verzögert und über ein Prisma 31 sowie den teildurchlässigen Spiegel 16 ebenfalls auf das optische Filter 17 geworfen. Die Polarisation der Strahlen ist in Fig. 1 angegeben und zwar für eine in der Zeichnungsebene liegende Schwingungsebene durch einen Doppelpfeil und für eine senkrecht zur Zeichnungsebene liegende Schwingungsebene durch einen Punkt (Draufsicht auf den Pfeil). Somit gelangt durch das optische Filter 17 hindurch einerseits der in der Zeichnungsebene schwingende Echostrahl $P_Z$ und andererseits der senkrecht zur Zeichnungsebene schwingende Bezugsstrahl $P_R$ zum nichtlinearen Kristall 18, der aufgrund des SHG-II-Effekts eine Strahlung von der doppelten Laserfrequenz abgibt und über ein auf die doppelte Laserfrequenz 2 abgestimmtes optisches Filter 21 auf den Photodetektor 19 wirft. Dessen Ausgangssignal gelangt über einen Verstärker 22 sowie einen Tiefpaß 20 zu dem einen Eingang eines Differenzverstärkers 23. Insoweit stimmt der Strahlengang von Echoimpuls und Bezugsimpuls weitgehend mit der anhand von Fig. 1 beschriebenen Anordnung überein, wobei lediglich durch das Polarisationsteilerprisma 15 Meßstrahl und Bezugsstrahl orthogonal zueinander polarisiert werden und folglich die Detektion mittels des nichtlinearen Kristalls 18 nach der SHG-II-Methode erfolgt.

Neben dem bisher beschriebenen Meßkanal enthält die Empfangsanordnung in Fig. 2 einen besonderen Referenzkanal, der am Prisma 31 abzweigt. Von dort gelangt nämlich ein Teil der Bezugstrahlung $P_R$ zu einem zweiten Polarisationsteilerprisma 32, welches wiederum mit seiner Empfindlichkeitsebene gegenüber der Schwingungsebene des ankommenden Strahl um 45° geneigt ist und somit diesen in zwei zueinander orthogonal polarisierte Komponenten zerlegt. Die senkrecht zur Zeichnungsebene schwingende Komponente wird über einen Spiegel 33 und einen halbdurchlässigen Spiegel 34 auf ein optisches Filter 37 geworfen, während die in der Zeichnungsebene schwingende Komponente über einen Spiegel 35 und den halbdurchlässigen Spiegel 34 ebenfalls zum optischen Filter 37 gelangt. Somit treffen auf den optisch nichtlinearen Kristall 38 ebenfalls zwei orthogonal zueinander polarisierende Strahlungen auf, welche jedoch beide aus dem Bezugstrahl $P_R$ abgeleitet sind. Sie werden im nichtlinearen Kristall 38 somit einer Autokorrelation unterworfen, während der nichtlineare Kristall 18 den Meßstrahl und den Bezugsstrahl einer Kreuzkorrelation unterwirft. Auch im Refernzkanal ist zwischen den nichtlinearen Kristall 38 und den Photodetektor 39 ein auf die doppelte Laserfrequenz abgestimmtes optisches Filter 41 eingeschaltet. Das Ausgangssignal des Photodetektors 39 gelangt über einen Tiefpaß 40 zum anderen Eingang des Differenzverstärkers 23. Sind die Strahlungswege des Interferometers im Referenzkanal, gebildet durch das Polarisationsteilerprisma 32 und die Spiegel 33 bis 35, gleich, so kann man gleichzeitig das Maximum des Photodetektorstroms sowohl im Meßkanal als auch im Referenzkanal einstellen. Das Ausgangssignal des Differenzverstärkers 23 nimmt bei Übereinstimmung von Meßimpulslaufzeit und Verzögerungszeit, d.h. bei fehlinder Laufzeitdifferenz einen Minimalwert an, so daß die am optischen Laufzeitglied 5 eingestellte Verzögerungszeit der Zielentfernung A proportional ist und in geeigneter Weise angezeigt werden kann. Durch den identischen Aufbau des jeweils aus optisch nichtlinearem Kristall und Photodetektor bestehenden Korrelators sowohl in Meßkanal als auch im Referenzkanal wird gewährleistet, daß etwaige Störeinflüsse auf die Kenndaten der Korrelatoren, also beisppielsweise Alterung, Temparatur oder dergl. in beiden Kanälen die gleich Wirkung haben und somit durch die Differenzmethode kompensiert werden.

Die Anwendung der Differenzmethode und der Abgleich auf das relative Minimum des Ausgangssignales bietet vorteilhaft die Möglichkeit, störende Intensitätsschwankungen des optischen Signals im Übertragungskanal zu kompensieren. Hierzu dient die in Fig. 3 wiedergegebene Anordnung. Meßkanal und Referenzkanal haben weitgehend den gleichen Aufbau wie bei der Ausführungsform gemäß Fig. 2. Im Meßkanal befindet sich der Verstärker 22; ferner ist im Referenzkanal zwischen den Photodetektor 39 und den Tiefpaß 40 ein Verstärker 42 eingeschaltet. Hinter dem optischen Verstärker 13 wird mittels eines Strahlteilerspiegels 53 ein Teil des Laserlichts aus der Meßstrecke ausgekoppelt und über einen Spiegel 54 parallel zum Mßtrahl auf das Ziel 2 gerichtet. Das Echo dieses zweiten Meßstrahls läuft vom Spiegel 54 reflektiert durch den Strahlenteiler 53 hindurch und gelangt zum Polarisationsteilerprisma 32 am Eingang des Referenzkanals. Das optische Laufzeitglied 5 liegt hier wie bei der Anordnung gemäß Fig. 1 nur im Meßkanal, dem über den teildurchlässigen Spiegel 4 das normale Echosignal zugeleitet wird. Die Auskopplung des Bezugssignals aus dem Senderstrahl erfolgt mit Hilfe eines Polarisationsteilerprismas 15 derart, daß das im optischen Laufzeitglied 5 verzögerte Bezugssignal in Bezug auf das über den Spiegel 4 eingebene Meßsignal orthogonal polarisiert ist. Die bei der Ausführungsform gemäß Fig. 2. durch das optische Laufzeitglied 5 gleichzeitig bewirkte Verzögerung des Signals für den Refernzkanal und des Bezugssignals für die Überlagerung mit dem Meßsignal ist bei der Ausführungsform gemäß Fig. 3 nicht erforderlich, weil das Referenzsignal selbst die Meßstrecke ebenfalls durchläuft und somit in der gleichen Weise verzögert ist wie das Meßsignal. Wegen der räumlichen Nachbarschaft der beiden Strahlenkomponenten im Übertragungskanal modulieren etwaige Störungen die Intensität und Feldstärken beider Strahlen gleichermaßen, so daß sich der Störeinfluß im Ausgangssignal des Differenzverstärkers aufhebt. Um ein günstiges Signal/Rausch-Verhältnis am Empfängerausgang zu erreichen, ist eine möglichst hohe Sekundärstrahlungsintensität der nichtlinearen Kristalle anzustreben. Dies läßt sich durch Phasenanpassung erreichen, indem der Winkel zwischen der einfallenden Laserstrahlung und der optischen Achse des Kristalls entsprechend gewählt wird, und außerdem die Orientierung der übrigen Kristallachsen in Bezug auf den Laserstrahl optimal ausgerichtet ist. Gegenüber Frequenzverschliebungen des Laserstrahls ist die beschriebene Meßeinrichtung unempfindlich. Sollen langsame Bewegungen des Ziels festgestellt werden, so läßt sich dies durch nacheinander erfolgende Abstandsmessungen erreichen.

(1) DeMaria, A. J. "Mode Locking opens door to pico-second pulses" Electronics, September 16, 112 (1968)

(2) Fricke, J. "Ultrakurze Laserimpulse I u.II" Physik unserer Zeit 7, 3,84 bzw. 7, 4,114 (1976)

(3) Rowe, H. E. Li, T. "Theory of Two-Photon Measurement of Laser Output" IEEE J. Quant. Electr. QE-6, 1. 49 (1970)

(4) Klauder, J. R. et al. "Correlation Effects in the display of picosecond pulses by two-photon techniques" Appl. Phys. Lett. 13,174 (Sept. 1968)

(5) Weber H. P. "Itensity Interferometry by Two-Photon Excitation of
    Dändliker, R. Fluorescence" IEEE Journ. Quant. Electr. QE-4, 12, 1009 (1968)

(6) Moran, M. J. et al "Interferometric Measurements of the Nonlinear Refractive-Index — Relative to CS₂ in Laser-System Related Materials" J. Quant. Electr., QE-11, 6.259 (1975)

(7) Von der Linde, D. "Experimental Study of Single Picosecond Light Pulses" J. Quant. Electr., QE-8, 3, 328 (1972)

# 0 008 089

(8) DeMaria, A. J.
Glenn, W. H.
Mack, M. E.

"Ultrakurze Laserimpulse — Werkzeuge für die Forschung"
Umschau *72;* 8, 241 (1972)

(9) Kleen, W.
Müller, R. (Ed.)

"Laser-Verstärkung durch induzierte Emission" Springer-Verlag,
Berlin, Heidelberg, New York (1969)

(10) Lauberau, A.
Von der Linde, D.

"Frequenzmodulation und Kompression ultrakurzer Lichtimpulse"
Z. Naturforsch. 25a, 1626 (1970)

**Patentansprüche**

1. Laser - Impuls - Entfernungsmesser, in dessen Empfänger der vom Ziel (2) reflektierte Meßstrahl ($P_Z$) und der in einem optischen Laufzeitglied (5) einstellbar verzögerte, aus dem Sendestrahl ($P_S$) abgeleitete Bezugsstrahl ($P_R$) einem optisch nichtlinearen Element (8; 18) eines optischen Korrelators zugeführt werden, welches Strahlung ($P_{2\omega_0}$) von der doppleten Senderfrequenz erzeugt und einem Strahlungsdetektor (9; 19) zuleitet, dadurch gekennzeichnet, daß als Sender ein modengekoppelter Laser (1) dient, dessen Sendeimpulse wesentlich kürzer sind als die Zeitkonstante des Strahlungsdetektors (9; 19); und daß an den Ausgang des Strahlungsdetektors (9; 19) eine Auswerteschaltung (10, 11; 23) angeschlossen ist, welche nur auf die Intensität der vom optischen Korrelator (8; 18) gelieferten Strahlung doppelter Frequenz anspricht und beim Erreichen maximaler Strahlungsintensität den Abgleich des Laufzeitgliedes (5) auf eine der Meßentfernung entsprechende Laufzeit anzeigt.

2. Entfernungsmesser nach Anspruch 1, dadurch gekennzeichnet, daß als optisch nichtlineares Element (8; 18) ein für Laserlicht der doppelten Senderfrequenz eine besonders starke Absorption aufweisender fluoreszierender Farbstoff dient, der bei jedem atomaren Absorptionsvorgang zwei Photonen der Laserstrahlung verbraucht ("Two Photon Fluorescence"=TPF).

3. Entfernungsmesser nach Anspruch 2, dadurch gekennzeichnet, daß als fluoreszierender Farbstoff Rhodamin 6G in Äthylalkohol oder in 1, 2, 5, 6-Dibenzanthrazen gelöst ist.

4. Entfernungsmesser nach Anspruch 1, dadurch gekennzeichnet, daß als optisch nichtlineares Element (8; 18) ein Strahlung der doppelten Frequenz ("Second Harmonic Generation"=SHG) erzeugender nicht-linearer Kristall (8; 18) dient, der aus je zwei Photonen der einfallenden Laserstrahlung ein Photon der Sekundärstrahlung doppelter Frequenz erzeugt.

5. Entfernungsmesser nach Anspruch 4, dadurch gekennzeichnet, daß als optisch nichtlinearer Kristall Lithiumniobat, KDP oder ADP dient.

6. Entfernungsmesser nach Anspruch 4 oder 5, dadurchgekennzeichnet, daß die im optisch nichtlinearen Element (8; 18) überlagerten Strahlen, also Bezugsstrahl ($P_R$) und Meßstrahl ($P_Z$) orthogonal zueinander polarisiert sind (SHG-II).

7. Entfernungsmesser nach einem der Ansprüche 1 bis 6, dadurch gekennzeichnet, daß zwischen Strahlungsdetektor (9; 19) und Auswerteschaltung (11; 23) ein Tiefpaß (10; 20) eingeschaltet ist.

8. Entfernungsmesser nach einem der Ansprüche 1 bis 7, dadurch gekennzeichnet, daß die Verzögerungszeit des optischen Laufzeitgliedes (5) durch das Ausgangssignal eines Steuergenerators (6) elektrisch gesteuert ist.

9. Entfernungsmesser nach Anspruch 8, dadurch gekennzeichnet, daß der Steuergenerator (6) zugleich die Zeitablenkung eines als Auswertegerät dienenden Oszillographen (11) steuert, dessen Signaleingang mit dem Ausgang des Strahlungsdetektors (9) in Verbindung steht.

10. Entfernungsmesser nach einem der Ansprüche 1 bis 9, dadurch gekennzeichnet, daß als optisches Laufzeitglied (5) ein Interferometer dient.

11. Entfernungsmesser nach einem der Ansprüche 1 bis 7, dadurch gekennzeichnet, daß als optisches Laufzeitglied (5) Lichtleiter dienen.

12. Entfernungsmesser nach einem der Ansprüche 6 bis 11, dadurch gekennzeichnet, daß zum Ableiten des Bezugstrahls ($P_R$) aus dem Senderstrahl ($P_S$) ein Polarisationsteilerprisma (15) vorgesehen ist.

13. Entfernungsmesser nach einem der Ansprüche 1 bis 12, dadurch gekennzeichnet, daß im Empfänger außer einem das optische Laufzeitglied (5), das optisch nichtlineare Element (8; 18) und den Strahlangsempfänger (9; 19) umfassenden Meßkanal (14—22) ein ebenfalls ein optisch nichtlineares Element (38) und einen Strahlungsempfänger (39) aufweisender Referenzkanal (32—41) vorgesehen ist, dem der Bezugsstrahl ($P_R$) zugeleitet wird und dessen Ausgangssignal zusammen mit dem Ausgangssignal des Meßkanals den beiden Eingängen eines Differenzverstärkers (23) zugeleitet wird (Fig. 2).

14. Entfernungsmesser nach Anspruch 13, dadurch gekennzeichnet, daß der Refernzkanal (32—41) eingangsseitig an den Ausgang des optischen Laufzeitgliedes (5) angeschlossen ist.

15. Entfernungsmesser nach einem der Ansprüche 1 bis 12, dadurch gekennzeichnet, daß im Empfänger außer einem das optische Laufzeitglied (5), das optisch nichtlineare Element (8; 18) und den Strahlungsempfänger (9; 19) umfassenden Meßkanal (14—22) ein ebenfalls ein optisch nichtlineares Element (38) und einen Strahlungssempfänger (39) aufweisender Referenzkanal (32—42) vorgesehen ist; aus dem Senderstrahl ($P_S$) vor der Ableitung (15) des Bezugsstrahls ($P_R$) ein Hilfsmeßstrahl ($P_H$) ausgekoppelt und parallel zum Hauptmeßstrahl ($P_M$) auf das Ziel (2) geworfen und nach Rükkehr zum Empfänger dem Eingang des Referenzkanals (32—42) zugeleitet wird und das Ausgangssignal des Referenzkanals (32—42) zusammen mit dem Ausgangssignal des Meßkanals den beiden Eingängen eines Differenzverstärkers (23) zugeleitet wird (Fig. 3).

16. Entfernungsmesser nach Anspruch 13 oder 15, dadurch gekennzeichnet, daß am Eingang des Referenzkanals (32—42) ein aus dem Bezugsstrahl ($P_R$) zwei orthogonal zueinander polisierte Hilfsbezugsstrahlen erzeugendes Polarisationsteilerprisma (32) vorgesehen ist und beide Hilfsbezugsstrahlen auf das optisch nichtlineare Element (38) des Referenzkanals geleitet werden.

17. Entfernungsmesser nach einem der Ansprüche 1 bis 16, dadurch gekennzeichnet, daß zwischen Meßstrecke und optisch nichtlinearem Element (8, 18) des Meßkanals ein optischer Verstärker (14) eingeschaltet ist.

18. Entfernungsmesser nach einem der Ansprüche 1 bis 17, dadurch gekennzeichnet, daß dem optisch nichtlinearen Element (18, 38) ein auf die Laserfrequenz ($\Omega_0$) abgestimmtes Filter (17, 37) vorgeschaltet ist.

19. Entfernungsmesser nach einem der Ansprüche 1 bis 18, dadurch gekennzeichnet, daß dem Photodetektor (19, 39) ein auf die doppelte Laserfrequenz ($2\Omega_0$) abgestimmte optisches Filter (21, 41) vorgeschaltet ist.

20. Entfernungsmesser nach einem der Ansprüche 1 bis 19, dadurch gekennzeichnet, daß ein optischer Verstärker (13) im Strahlengang hinter dem Modengekoppelten Laser (1) eingesetzt ist, der die Strahlungsintensität und die Pulsform des Sendestrahls ($P_S$) steuert.

21. Entfernungsmesser nach einem der Ansprüche 1 bis 20, dadurch gekennzeichnet, daß ein elektrooptisches Zeitfilter (12) im Strahlengang hinter dem modengekoppelten Laser (1) eingesetzt wird, das die Zeitabstände aufeinanderfolgender Laserimpulse steuert.

**Revendications**

1. Télémètre à impulsions laser, dans le récepteur duquel le rayon de mesure ($P_Z$) réfléchi par une cible (2) et le rayon de référence ($P_R$) retardé de façon réglable dans un composant optique (5) et dérivé du rayon émis ($P_S$) sont appliqués à un élément optiquement non-linéaire (8; 18) d'un corrélateur optique, qui produit un rayonnement $P_{2\Omega_0}$) d'une fréquence double de la fréquence d'émission ainsi qu'à un détecteur de rayonnement (9; 19), caractérisé en ce qu'il est prévu comme émetteur un laser à couplage de modes (1), dont les impulsions émises sont bien plus courtes que la constante de temps du détecteur de rayonnement (9; 19) et en ce que la sortie du détecteur de rayonnement (9; 19) est reliée à un circuit de traitement (10, 11; 23) qui ne réagit qu'à l'intensité du rayonnement de fréquence double qui est fourni par le corrélateur optique (8; 18) et qui, lors de l'atteinte de l'intensité maximale de rayonnement, indique le réglage du composant de retardement (5) sur un temps de passage correspondant à la mesure d'éloignement.

2. Télémètre selon la revendication 1, caractérisé en ce qu'il est prévu comme élément optiquement non-linéaire (8; 18) un colorant fluorescent exerçant une absorption particulièrement forte de la lumière laser produite au double de la fréquence d'émetteur et qui consomme, à chaque processus d'absorption atomique, deux photons du rayonnement laser ("fluorescence à deux photons"=TPF).

3. Télémètre selon la revendication 2, caractérisé en ce qu'on utilise comme colorant fluorescent de la rhodamine 6G dissoute dans de l'alcool éthylique ou dans du 1, 2, 5, 6-dibenzo-anthracène.

4. Télémètre selon la revendication 1, caractérisé en ce que l'on utilise comme élément optiquement non-linéaire (8) un cristal (8; 18) non-linéaire produisant un rayonnement de fréquence double (génération de seconde harmonique=SHG), qui produit à chaque fois à partir de deux photons du rayonnement laser incident un photon de rayonnement secondaire de fréquence doublée.

5. Télémètre selon la revendication 4, caractérisé en ce qu'on utilise comme cristal optiquement non-linéaire du niobate de lithium, du KDP ou de l'ADP.

6. Télémètre selon l'une des revendications 4 ou 5, caractérisé en ce que les rayons superposés dans l'élément optiquement non-linéaire (8; 18), c'est-à-dire le rayon de référence $P_R$ et le rayon de mesure $P_Z$, sont polarisés orthogonalement l'un par rapport à l'autre (SHG-II).

7. Télémètre selon l'une quelconque des revendications 1 à 6, caractérisé en ce qu'il est prévu un filtre passe-bas (10; 20) entre le détecteur de rayonnement (9; 19) et le circuit de traitement (11; 23).

8. Télémètre selon l'une quelconque des revendications 1 à 7, caractérisé en ce que le temps · de retard du composant optique de retardement (5) est commandé électriquement par le signal de sortie d'un générateur de commande (6).

9. Télémètre selon la revendication 8, caractérisé en ce que le générateur de commande (6) commande simultanément la déviation temporelle d'un oscillographe (11) servant d'appareil de traitement et dont l'entrée de signal est reliée à la sortie du détecteur de rayonnement (9).

10. Télémètre selon l'une quelconque des revendications 1 à 9, caractérisé en ce qu'on utilise comme composant optique de tetardement (5) un interféromètre.

11. Télémètre selon l'une quelconque des revendications 1 à 7, caractérisé en ce qu'on utilise comme composant optique de retardement (5) des conducteurs optiques.

12. Télémètre selon l'une quelconque des revendications 6 à 11, caractérisé en ce qu'il est prévu, pour dériver le rayon de référence ($P_R$) par rapport au rayon émis ($P_S$), un prisme de division de polarisation (15).

13. Télémètre selon l'une quelconque des revendications 1 à 12, caractérisé en ce qu'il est prévu, dans le récepteur, en plus d'un canal de mesure (14—22) comportant le composant optique de retardement (5), l'élément optiquement non-linéaire (8; 18) et le récepteur de rayonnement (9; 19) un canal de référence (32—41) comportant également un élément optiquement non-linéaire (38) et un récepteur de rayonnement (39) et qui reçoit le rayon de référence ($P_R$), tandis que son signal de sortie est appliqué en combinaison avec le signal de sortie du canal de mesure aux deux entrées d'un amplificateur de différence (23) (figure 2).

14. Télémètre selon la revendication 13, caractérisé en ce que le canal de référence (32—41) est relié du côté d'entrée à la sortie du composant optique de temporisation (5).

15. Télémètre selon l'une quelconque des revendications 1 à 12, caractérisé en ce qu'il est prévu dans le récepteur, en plus d'un canal de mesure (14—22) comportant le composant optique de retardement (5), l'élément optique non-linéaire (8; 18) et le récepteur de rayonnement (9; 19), un canal de référence (32—42) comportant également un élément optiquement non-linéaire (38) et un récepteur de rayonnement (39), en ce qu'un rayon auxiliaire de mesure ($P_H$) est découplé du rayon émis ($P_S$ avant la dérivation (15) du rayon de référence ($P_R$) et est projeté, en parallèle au rayon principal de mesure ($P_M$) sur la cible (2), puis, après son retour au récepteur, est appliqué à l'entrée du canal de référence (32—42) dont le signal de sortie est transmis, en combinaison avec le signal de sortie du canal de mesure, aux deux entrées d'un amplificateur de différence (32).

16. Télémètre selon l'une des revendications 13 ou 15, caractérisé en ce qu'il est prévu à l'entrée du canal de référence (32—42) un prisme de division de polarisation (32) produisant à partir du rayon de référence ($P_R$) deux rayons auxiliaires de référence qui sont polarisés orthogonalement l'un par rapport à l'autre et qui sont appliqués à l'élément optiquement non-linéaire (38) du canal de référence.

17. Télémètre selon l'une quelconque des revendications 1 à 16, caractérisé en ce qu'il est prévu un amplificatueur optique (14) entre la voie de mesure et l'élément optiquement non-linéaire (8; 18) du canal de mesure.

18. Télémètre selon l'une quelconque des revendications 1 à 17, caractérisé en ce qu'un filtre (17, 37) accordé sur la fréquence de laser ($\Omega_0$) est branché en amont de l'élément optiquement non-linéaire (18, 38).

19. Télémètre selon l'une quelconque des revendications 1 à 18, caractérisé en ce qu'il est prévu en amont du photodétecteur (19, 39) un filtre optique (21, 41) accordé sur le double de la fréquence de laser ($2\Omega_0$).

20. Télémètre selon l'une quelconque des revendications 1 à 19, caractérisé en ce qu'un amplificateur optique (13) est placé dans le trajet des rayons en arrière du laser à couplage de modes (1) de manière à commander l'intensité du rayonnement et la forme d'impulsions du rayonnement émis ($P_S$).

21. Télémètre selon l'une quelconque des revendications 1 à 20, caractérisé en ce qu'un filtre électro-optique de temporisation (12) est placé dans le trajet des rayons en arrière du laser à couplage de mode (1) de manière à commander les intervalles d'espacement d'impulsions laser successives.

## Claims

1. Laser pulse range meter comprising a receiver in which the measuring beam ($P_Z$) reflected by the target (2) and the reference beam ($P_R$) derived from the transmitted beam ($P_S$) and adjustably delayed in an optical delay means (5) are commonly supplied to an optically non-linear element (8; 18) of an optical correlator, said element generating radiation ($P_{2\Omega_0}$) at double the transmitter frequency and feeding this radiation to a radiation detector (9; 19) characterized in that a mode-locked laser (1) is used as transmitter, the transmitted pulses of which are essentially shorter than the time constant of the radiation detector (9; 19); and that an evaluation circuit (10, 11; 23) is connected to the radiation detector (9; 19), said circuit responding only to the intensity of the double frequency radiation delivered by the optical correlator (8; 18) and when the maximum radiation intensity is reached indicating the balanced adjustment of the delay means (5) to a traveling time corresponding to the measured range.

2. Range meter according to claim 1, characterized in that as the optically non-linear element (8; 18) a fluorescent dye with especially high absorption for laser light of double the transmitter frequency is used which absorbs two photons of the laser energy for every atomic absorption process ("Two Photon Fluorescence" TPF).

3. Range meter according to claim 2, characterized in that as the fluorescent dye, Rhodamin 6G is dissolved in ethyl alcohol or in 1, 2, 5, 6-dibenzanthrazen.

4. Range meter according to claim 1, characterized in that as the optically non-linear element (8; 18) a second-harmonic generation non-linear crystal (8; 18, 38) is used which generates one photon of second-harmonic secondary radiation for every two photons of laser radiation received.

5. Range meter according to claim 4, characterized in that lithium niobat, KDP, or ADP is used as the optically non-linear crystal.

6. Range meter according to claim 4 or 5, characterized in that the beams superimposed in the optically non-linear element (8; 18, 38), i.e. reference beam ($P_R$) and measuring beam ($P_Z$), have orthogonal polarization with respect to each other (second-harmonic generation-II).

7. Range meter according to one of the claims 1 to 6, characterized in that a low-pass filter (10; 20) is connected between the radiation detector (9; 19) and the evaluating circuit (11; 23).

8. Range meter according to one of the claims 1 to 7, characterized in that the delay time of the optical delay line (5) is electrically controlled by the output signal of a control generator (6).

9. Range meter according to claim 8, characterized in that the control generator (6) simultaneously controls the sweep of the oscilloscope (11) used as the evaluating device, the signal input of which is connected to the output of the radiation detector (9).

10. Range meter according to one of the claims 1 to 9, characterized in that an interferometer is used as the optical time-delay element (5).

11. Range meter according to one of the claims 1 to 7, characterized in that optical fibers are used as the optical time-delay element (5).

12. Range meter according to one of the claims 6 to 11, characterized in that a polarization selective prism (15) is provided for the derivation of the reference beam ($P_R$) from the measuring beam ($P_S$).

13. Range meter according to one of the claims 1 to 12, characterized in that in addition to a measuring channel (14—22) consisting of the optical time-delay element (5), the optically non-linear element (8; 18) and the radiation receiver (9; 19), the receiver contains a reference channel (32—41) consisting also of an optically non-linear element (38) and a radiation receiver (39) into which the reference beam ($P_R$) is fed, and the output signal of which is fed into the two inputs of a differential amplifier (23) together with the output signal of the measuring channel (Fig. 2).

14. Range meter according to claim 13, characterized in that the input of the reference channel (32—41) is connected to the output of the optical time-delay element (5).

15. Range meter according to one of the claims 1 to 12, characterized in that in addition to the measuring channel (14—22) consisting of the optical time delay element (5), the optical non-linear element (8; 18) and the radiation receiver (9; 19) the receiver contains a reference channel (32—42) consisting also of an optically non-linear element (38) and a radiation receiver (39); that an auxiliary measuring beam ($P_H$) is derived from the transmitter beam ($P_S$) prior to the derivation (15) of the reference beam ($P_R$), said auxiliary measuring beam is radiated onto the target (2) in parallel to the main measuring beam ($P_M$), and after return to the receiver is fed into the input of the reference channel (32—42); and that the output signal of the reference channel (32—42) together with the output signal of the measuring channel is supplied to the two inputs of a differential amplifier (32) (Fig. 3).

16. Range meter according to claim 13 or 15, characterized in that a polarization-selective prism (32) is provided at the input of the reference channel (32—41) which derives from the reference beam ($P_R$) two auxiliary reference beams having orthogonal polarization with respect to each other, and that both auxiliary reference beams are directed onto the optically non-linear element (38) of the reference channel.

17. Range meter according to one of the claims 1 to 16, characterized in that an optical amplifier (14) is connected between the measuring element and the optically non-linear element (8; 18) of the measuring channel.

18. Range meter according to one of the claims 1 to 17, characterized in that an optical filter (17, 37) tuned to the laser frequency ($\Omega_0$) is provided in front of the optically non-linear element (18, 38).

19. Range meter according to one of the claims 1 to 18, characterized in that an optical filter (21, 41) tuned to the laser frequency second harmonic ($2\Omega_0$) is provided in front of the photodetector (19, 39).

20. Range meter according to one of the claims 1 to 19, characterized in that an optical amplifier (13) is used in the optical path behind the mode-locking laser (1), said amplifier controlling the radiation intensity and pulse shape of the transmitter beam ($P_S$).

21. Range meter according to one of the claims 1 to 20, characterized in that an electro-optical time filter (12) is used in the optical path behind the mode-locking laser (1), said filter controlling the time spacing between successive laser pulses.

Fig. 1

ÜBERTRAGUNGSKANAL

MESSKANAL

REFERENZKANAL

nichtlin. El.

Photo-det.

Diff.-V.

Fig. 2

Fig. 3

MESSKANAL

REFERENZKANAL

3